## Europäisches Patentamt
## European Patent Office
## Office européen des brevets

(19)

(11) Veröffentlichungsnummer : **0 401 671 B1**

## (12) EUROPÄISCHE PATENTSCHRIFT

(45) Veröffentlichungstag der Patentschrift :
**03.06.92 Patentblatt 92/23**

(51) Int. Cl.$^5$ : **G01C 19/70**

(21) Anmeldenummer : **90110315.0**

(22) Anmeldetag : **30.05.90**

(54) **Ringlaserkreisel mit Drehschwingeinrichtung.**

(30) Priorität : **02.06.89 DE 3918049**

(43) Veröffentlichungstag der Anmeldung :
**12.12.90 Patentblatt 90/50**

(45) Bekanntmachung des Hinweises auf die
Patenterteilung :
**03.06.92 Patentblatt 92/23**

(84) Benannte Vertragsstaaten :
**DE FR GB IT**

(56) Entgegenhaltungen :
**FR-A- 2 370 956**
**GB-A- 2 004 113**

(73) Patentinhaber : **HONEYWELL REGELSYSTEME GMBH**
**Kaiserleistrasse 39**
**W-6050 Offenbach am Main (DE)**

(72) Erfinder : **Gauert, Rolf, Dr. rer. nat.**
**Lindenweg 4**
**W-8755 Alzenau (DE)**
Erfinder : **Hansli, Werner, Dipl.-Ing.**
**Im Kirschensand 6**
**W-6146 Alsbach 1 (DE)**

(74) Vertreter : **Herzbach, Dieter et al**
**Honeywell Europe S.A. Holding KG Patent-**
**und Lizenzabteilung Kaiserleistrasse 39**
**Postfach 10 08 65**
**W-6050 Offenbach am Main (DE)**

EP 0 401 671 B1

Jouve, 18, rue Saint-Denis, 75001 PARIS

EP 0 401 671 B1

## Beschreibung

Die vorliegende Erfindung bezieht sich auf einen Ringlaserkreisel nach dem Gattungsbegriff des Patentanspruches 1.

Bei einem Ringlaserkreisel werden zwei elektromagnetische Wellen in Form von monochromatischen Lichtstrahlen erzeugt, die sich in entgegengesetzten Richtungen fortpflanzen. Bei einer Drehung des Ringlaserkreisels um seine Eingangsachse erhöht sich die Weglänge für den einen Lichtstrahl, während sich die Weglänge für den anderen Lichtstrahl reduziert. Die sich ergebende Weglängenänderung erzeugt eine Frequenzänderung in jedem der Lichtstrahlen, da die Schwingungsfrequenz der Laserstrahlen von der Länge der Laserstrecke abhängig ist. Die Frequenzdifferenz ist demnach eine Funktion der Drehgeschwindigkeit.

Beiniedrigen Drehgeschwindigkeiten wird die Frequenzdifferenz zwischen beiden Lichtstrahlen gering, und die beiden Lichtstrahlen haben die Tendenz auf einer Frequenz zu schwingen, was als Mitzieheffekt bekannt ist. Um diese gegenseitige Beeinflussung der beiden Lichtstrahlen bei niedrigen Drehgeschwindigkeiten auszuschließen, ist es bekannt, den Ringlaserkreisel in hin- und hergehende Drehschwingungen zu versetzen, wodurch der bekannte Mitzieheffekt weitgehendst aufgehoben wird.

Um die hin- und hergehende Drehschwingungsbewegung zu erzeugen, sieht man in der Regel eine mechanische Drehschwingeinrichtung vor, die den Ringlaserkreisel in eine Zitterbewegung versetzt. Diese Einrichtung besteht üblicherweise aus einem Speichenrad, das in eine Aussparung des Ringlaserkreisels eingesetzt wird, mit seiner Nabe gehäusefest montiert ist und mittels auf den Speichen angeordneten piezoelektrischen Elementen bei deren Ansteuerung eine hin- und hergehende Bewegung des Ringlaserkreisels erzeugt. Eine derartige Anordnung kann beispielsweise für eine dreieckförmige Laserstruktur der DE-OS 28 39 066 und für eine rechteckförmige Laserstruktur der GB-PS 15 36 081 entnommen werden.

Ausgehend von diesem Stand der Technik ist es die Aufgabe der vorliegenden Erfindung, einen Ringlaserkreisel anzugeben, bei dem der Aufwand für eine getrennte Drehschwingeinrichtung vermieden werden kann. Die Lösung dieser Aufgabe gelingt gemäß den Merkmalen des Patentanspruches 1. Weitere vorteilhafte Ausgestaltungen des erfindungsgemäßen Ringlaserkreisels sind den abhängigen Ansprüchen entnehmbar.

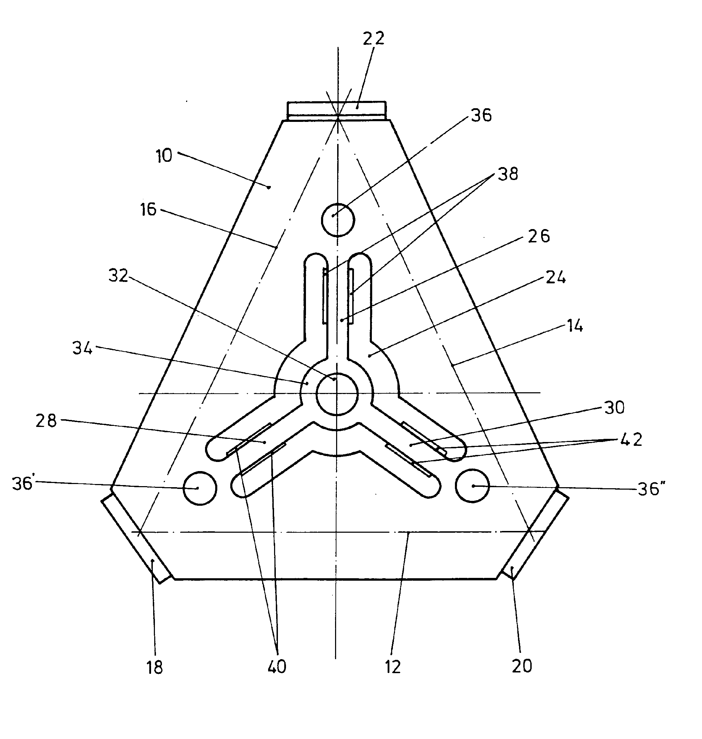

Anhand der einzigen Figur der beiliegenden Zeichnung sei im folgenden ein Ausführungsbeispiel des erfindungsgemäßen Ringlaserkreisels näher beschrieben.

Gemäß dieser Figur umfaßt der Ringlaserkreisel einen Block 10 aus Glaskeramik oder einem anderen Material, in dem entlang von angedeuteten Bohrungen 12, 14 und 16 eine geschlossene Laserstrecke eingearbeitet ist. Auf dieser geschlossenen Laserstrecke laufen gegensinnig zwei Laserstrahlen um, wobei die Gasentladung über nicht dargestellte Anoden und eine Kathode unterhalten wird. In den Eckpunkten des dreieckförmigen Blockes 10 sind zwei Umlenkspiegel 18, 20 und ein weiterer Spiegel 22, der neben der Umlenkung der Laserstrahlen zusätzlich der Auslesung dient, angeordnet. Die Spiegel können teilweise verstellbar sein, um die Laserpfadlänge optimal einzustellen, wie dies entsprechend dem Stand der Technik bekannt ist.

Aus dem dreieckförmigen Laserblock 10 sind durch Materialentnahme, beispielsweise durch Ausfräsungen 24, drei Speichen 26, 28 und 30 gebildet, die vom Mittel- und Schwerpunkt des gleichschenkligen Dreieckes jeweils zu den Eckpunkten verlaufen. Durch eine erste Bohrung 32 im Zentrum wird eine Habe 34 gebildet, mittels der z.B. der Laserblock 10 auf einen gehäusefesten nicht dargestellten Dorn aufgesetzt werden kann. Weitere Bohrungen 36, 36′ und 36″ zwischen dem Ende der Speichen und den Eckpunkten des Dreiecks dienen der Entlastung bezüglich der bei der Vibrationsbewegung auftretenden mechanischen Spannungen. über die Abmessungen und die Form der Speichen kann die Eigenfrequenz der Schwingung vorgegeben werden. Vorzugsweise ist die Breite der Speichen über ihre Länge nicht konstant. Die Form kann in der Draufsicht trapezförmig sein, wobei sich die Speichen nach außen verjüngen, um eine gleichmäßigere Spannungsbelastung zu erhalten.

Der Vibrationsantrieb erfolgt in bekannter Weise durch piezoelektrische Elemente 38, 40 und 42, die auf die Speichen 26, 28 und 30 aufgeklebt sind und bei entsprechender elektrische Ansteuerung eine Verbiegung dieser Speichen und damit eine Vibrationsbewegung des Blockes 10 hervorrufen.

## Patentansprüche

1. Ringlaserkreisel mit einem Block aus Glaskeramik oder einem anderen gasdichten Material mit geringem Temperaturausdehnungskoeffizienten, in welchen Block Bohrungen zur Vorgabe einer geschlossenen Laserstrecke eingearbeitet sind und mit einer Einrichtung, um den Block in Drehschwingungen zu versetzen, welche Speichen zwischen einem inneren ruhenden und einem äußeren beweglichen Teil umfaßt, **dadurch gekennzeichnet,** daß die Speichen (26-30) durch Entnahme von Material aus dem Laserblock (10) gebildet sind und einen integralen Bestandteil des Laserblockes (10) bilden.

2

2. Laserkreisel nach Anspruch 1 mit einem dreieckförmigen Block, **dadurch gekennzeichnet,** daß die Speichen (26-30) vom Schwerpunkt des Dreiecks zu den Eckpunkten gerichtet sind.

3. Laserkreisel nach Anspruch 2, **dadurch gekennzeichnet,** daß die Speichen (26-30) in eine zentrale Nabe (34) übergehen, über die eine gehäusefeste Abstützung erfolgt.

4. Laserkreisel nach Anspruch 2, **gekennzeichnet durch** zusätzliche Spannungs-Entlastungsbohrungen (36, 36', 36") in Fortsetzung der Speichen zwischen diesen und den Eckpunkten des Dreiecks.

5. Laserkreisel nach Anspruch 2, **dadurch gekennzeichnet,** daß die Speichen über ihre Länge eine unterschiedliche Breite aufweisen.

6. Laserkreisel nach Anspruch 5, **dadurch gekennzeichnet,** daß die Speichen in ihrer Draufsicht die Form eines langgezogenen Trapezes aufweisen.

7. Laserkreisel nach Anspruch 6, **dadurch gekennzeichnet,** daß sich die Speichen von innen nach außen verjüngen.

8. Laserkreisel nach einem der Ansprüche 1 bis 7, **dadurch gekennzeichnet,** daß die Speichen (26-30) durch Ausfräsungen (24) innerhalb des Laserblockes hergestellt werden.

9. Laserkreisel nach Anspruch 2, **dadurch gekennzeichnet,** daß die Speichen eine konstante Breite aufweisen.

10. Laserkreisel nach Anspruch 2, **dadurch gekennzeichnet,** daß die Speichen sich zunächst verjüngen und dann wieder verbreitern.

## Claims

1. Ring laser gyro comprising a block from glas ceramics or from another gas-tight material, respectively, having a low temperature coefficient of expansion, with bores being machined into said block to provide a closed laser path, and comprising a device for dithering said block, with said device comprising spokes between a stationary inner portion and a movable outer portion, **characterized in that** the spokes (26-30) are formed by a removal of material from said laser block (10) so as to form an integral component of said laser block (10).

2. Ring laser gyro according to claim 1 comprising a triangular-shaped block, **characterized in that** the spokes (26-30) are directed from the center of gravity of said triangle to the corner points.

3. Ring laser gyro according to claim 2, **characterized in that** the spokes (26-30) pass over to a central hub (34) which is stationarily mounted.

4. Ring laser gyro according to claim 2, **characterized in that** additional stress relieve bores (36,36',36") are arranged in continuation of the spokes between those spokes and the corner points of the triangle.

5. Ring laser gyro according to claim 2, **characterized in that** the spokes comprise a different width over their length.

6. Ring laser gyro according to claim 5, **characterized in that** the spokes in a plane view have the shape of an oblong trapezoid.

7. Ring laser gyro according to claim 6, **characterized in that** the spokes are tapered from the inside to the outside.

8. Ring laser gyro according to one of claims 1 to 7, **characterized in that** the spokes (26-30) are produced by milling-out (24) from the laser block.

9. Ring laser gyro according to claim 2, **characterized in that** the spokes comprise a constant width.

10. Ring laser gyro according to claim 2, **characterized in that** the spokes are first reduced in their width and then are widened with respect to their width.

## Revendications

1. Gyrolaser en anneau comportant un bloc en vitrocéramique ou en un autre matériau étanche aux gaz et à faible coefficient de dilatation thermique, bloc dans lequel sont usines des alésages prédéfinissant un chemin fermé de laser, et comportant un dispositif qui est destine à faire vibrer le bloc selon des oscillations de rotation, et qui comprend des rayons entre une partie intérieure au repos et une partie extérieure mobile, caractérisé en ce que les rayons (26-30) sont réalisés par enlèvement de matière du bloc laser (10) et font partie intégrante du bloc laser (10).

2. Gyrolaser selon la revendication 1, comportant un bloc de forme triangulaire, caractérisé en ce que les rayons (26-30) sont dirigés du centre de gravité du triangle vers les sommets.

3. Gyrolaser selon la revendication 2, caractérisé en ce que les rayons (26-30) se raccordent d'un seul tenant à un moyeu central (34) par l'intermédiaire duquel s'effectue un montage fixe sur le carter.

4. Gyrolaser selon la revendication 2, caractérisé par des alésages supplémentaires (36, 36′, 36″) de libération des contraintes, en prolongement des rayons, entre ceux-ci et les sommets du triangle.

5. Gyrolaser selon la revendication 2, caractérisé en ce que les rayons présentent une largeur différente sur l'étendue de leur longueur.

6. Gyrolaser selon la revendication 5, caractérisé en ce que les rayons présentent en vue de dessus, la forme d'un trapèze allongé.

7. Gyrolaser selon la revendication 6, caractérisé en ce que les rayons se rétrécissent de l'intérieur vers l'extérieur.

8. Gyrolaser selon l'une des revendications 1 à 7, caractérisé en ce que les rayons (26-30) sont réalisés par des évidements fraises (24) a l'intérieur du bloc laser.

9. Gyrolaser selon la revendication 2, caractérisé en ce que les rayons présentent une largeur constante.

10. Gyrolaser selon la revendication 2, caractérisé en ce que les rayons se rétrecissent tout d'abord pour ensuite s'élargir à nouveau.